# EUROPEAN PATENT APPLICATION

(11) **EP 2 911 272 A1**
(43) Date of publication of application: **26.08.2015**
(21) Application number: 13847832.6
(22) Date of filing: 15.10.2013
(51) Int. Cl.: H02J 9/06, H02J 3/32, H02J 3/38, H02J 3/46, H02J 7/35

(54) **POWER SOURCE CONTROL SYSTEM, CONTROL DEVICE AND CONTROL METHOD**

(30) Priority: 16.10.2012 JP 2012229261
(71) Applicant: Kabushiki Kaisha Toshiba, Minato-ku Tokyo 105-8001 (JP)
(72) Inventor: OGURA, Yasuhiro, Tokyo 105-8001 (JP)
(74) Representative: Hoffmann Eitle
(86) International application number: PCT/JP2013/077933
(87) International publication number: WO 2014/061645

(57) **Abstract**

A synchronous operation of an external power-supply device activated in blackout with an internal power-source device placed in a house or a plant is ensured. A commercial power-source system and an external power-supply device are connected to a power-source line provided in a house, etc., through a double-throw switch. The house, etc., is provided with an internal power-source device including multiple power supplies being connected to a load through the power-source line. When a power-source monitoring unit detects the blackout of the commercial power-source system, a controller stops the respective operations of the internal power supplies, and switches over the double-throw switch from the commercial power-source system to the external power-supply device. After the external power-supply device is connected to the power-source line, the control unit starts following operation in the order of the power source having a less output capacity fluctuation and connects those to the external power-supply device.

## Description

### FIELD

Embodiments of the present disclosure relate to power-supply control system, control apparatus, and control method which are suitable for connecting multiple kinds of power supplies placed in houses and plants with an external power-supply device activated at the time of a blackout of a commercial power-source system.

### BACKGROUND

It is widely known that, when a blackout of a commercial power-source system occurs, an emergency power-supply device is activated. For example, emergency power-supply devices are installed at an individual house, multifamily buildings, hospitals, and other plants, and when a system blackout occurs, such emergency power- supply devices are activated, thereby enabling a power supply to the houses, plants, etc. The emergency power-supply devices are normally disconnected from the loads in houses and plants except an occurrence of a blackout. Hence, such devices are called external power-supply devices.

Example conventional external power-supply devices are engine type power generators, but in recent years, large-capacity batteries are getting attention since the improvement of the battery performances is advancing and the maintenance is easy in comparison with power generators. External power-supply devices utilizing a battery are directly charged by a commercial power-source system, and perform discharging at the time of a blackout of the commercial power-source system, thereby supplying power to houses and plants instead of the commercial power-source system. Hence, the external power-supply devices utilizing a battery have an interconnection operation function with a commercial power-source system, and an autonomous operation function in order to independently supply power.

Recently, in-house power generation devices, such as a solar power generation device, a wind power generation device, and a fuel cell battery, are often installed in houses and plants, and those in-house power generation devices include batteries to store surplus power. Unlike the external power-supply devices activated at the time of a blackout as explained above, those in-house power generation devices have the generated power mainly utilized in houses and plants where those in-house power generation devices are installed. Hence, those devices are called internal power-supply devices B. At the time of a blackout of a commercial power-source system, power from those internal power-supply devices B is also supplied to houses and plants, and technologies disclosed in Patent Documents 1 to 3 have been proposed.

### [Related Technical Documents]

### [Patent Documents]

Patent Document 1: JP 2010-041783 A
Patent Document 2: JP 2005-318665 A
Patent Document 3: JPH11-069661 A

External power-supply devices are assumed to be utilized in the case of a blackout of a commercial power-source system. Hence, the power storage capacities thereof are limited, and it is difficult to supply sufficient power to operate all loads in houses, plants and facilities connected to the external power-supply devices. Accordingly, it can be thought that at the time of a blackout, by performing interconnection operation of the internal power-supply device utilized in each of houses and plants with the external power-supply devices, necessary power can be supplied.

However, internal power-supply devices B include power supplies like a solar power generation device and a wind power generation device which have the output capacity fluctuated in accordance with a factor like a weather condition. When a device like a solar power generation device which has the fluctuating output is connected to the external power-supply devices, an AC output voltage may fluctuate upon a fluctuation in the output by the solar power generation device, etc., and if this fluctuation is large, the external power-supply devices may be shut down. This phenomenon becomes quite apparent when the capacity of the internal power-supply device B that has the fluctuating output capacity relative to the output by the external power-supply devices is relatively large. Consequently, a synchronous operation is sometimes disabled between the external power-supply device and the various in-house power generation devices connected therewith.

An objective of the embodiments of the present disclosure is to provide power-supply control system, control apparatus, and control method which ensure a synchronous operation between an external power-supply device and an internal power-supply device B when the internal power-supply device B that includes a power supply which has a fluctuating output capacity like a solar power generation device, and a power supply with a little output fluctuation like a battery is connected to the external power-supply device which is activated at the time of a blackout of a commercial power-source system.

The power-supply control system, control apparatus, and control method according to embodiments of the present disclosure first connect a power supply like a battery which can adjust the output capacity to an external power-supply device activated at the time of a blackout of a commercial power-source system, next, connect and operate a power supply like a fuel cell which has a little output fluctuation, and then connect and operate a power supply like a solar power generation device which has a large fluctuation in output.

That is, an embodiment of the present disclosure has the following configurations:
(1) The embodiment comprises an external power-supply device to be activated when a blackout of a commercial power-source system occurs; a switch switching between the commercial power-source system and the external power-supply device at a time of the blackout or a power-supply recovery; an internal power-supply device comprising a plurality of internal power supplies; a load connected to those power supplies; and a control device controlling activation and deactivation of those power supplies.
(2) The internal power-supply device includes a power supply having a stable output capacity, and another power supply having a larger output capacity fluctuation than the output capacity of the power source having a stable output capacity, each of the plurality of internal power supplies has a tracking function to the commercial power-source system and to the external power-supply device, and each of the plurality of internal power supplies performs interconnection operation with the commercial power-source system and the external power-supply device by the tracking function.
(3) The control device controls the switch to switch from the commercial power-source system to the external power-supply device at the time of the blackout of the commercial power-source system to supply power to the load from the external power-supply device.
(4) The control device controls the power supply having the stable output capacity to perform the interconnection operation with the external power-supply device after switching to the external power-source device and then controls the another power source having the larger output capacity fluctuation to perform the interconnection operation with the external power-supply device.

### BRIEF DESCRIPTION OF THE DRAWINGS

FIG. 1 is a block diagram illustrating an embodiment of the present disclosure;
FIG. 2 is a block diagram illustrating an external power-supply device according to the embodiment of the present disclosure;
FIG. 3 is a block diagram illustrating a battery of an internal power-supply device according to the embodiment of the present disclosure;
FIG. 4 is a block diagram illustrating a control device according to the embodiment of the present disclosure;
FIG. 5 is a flowchart for explaining an operation according to the embodiment;
FIG. 6 is a block diagram illustrating another embodiment of the present disclosure; and
FIG. 7 is a block diagram illustrating the other embodiment of the present disclosure.

### DETAILED DESCRIPTION

### (1) First Embodiment

### (1-1) Configuration

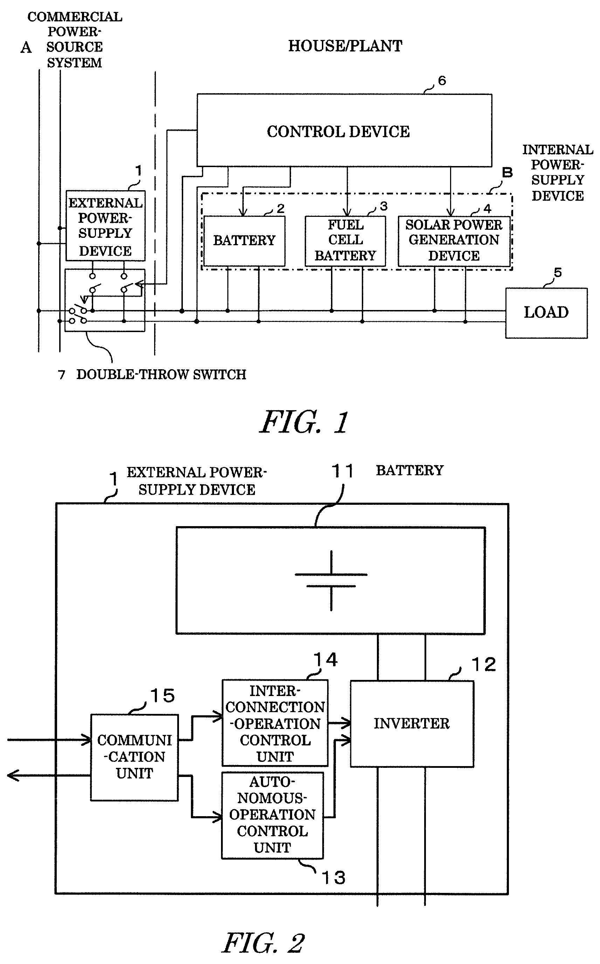

As illustrated in FIG. 1, a power-supply control apparatus of this embodiment includes a commercial power-source system A, an external power-supply device 1, an internal power-supply device B, and a control device 6 that controls a switchover operation therebetween. The internal power-supply device B includes, for example, a battery 2, a fuel cell battery 3, and a solar power generation device 4.

The internal power-supply device B is connected with a load 5 placed in a house or a plant through a power-supply line. The load 5 is a general load which includes home electronics like an air conditioner, and power units like a motor, and which is placed in the house or in the plant where an in-house power generation device is installed. The load 5 is connected with the commercial power-source system A and the external power-supply device 1 through a double-throw switch 7 and the power-supply line.

The double-throw switch 7 is switched over in accordance with an instruction from the control device 6 or by a manual operation, and selectively connects the commercial power-source system A and the external power-supply device 1 with the internal power-supply device B and the load 5. When no blackout of the commercial power-source system A is occurring, the double-throw switch 7 connects the commercial power-source system A with the internal power-supply device B and the load 5. When a blackout of the commercial power-source system A occurs, the double-throw switch connects the external power-supply device 1 with the internal power-supply device B and the load 5.

As illustrated in FIG. 2, the external power-supply device 1 includes a battery 11, an inverter 12, an autonomous operation control unit 13, an interconnection operation control unit 14, and a communication unit 15. The output and capacity of the battery 11 are not sufficient to cover the whole power to the houses or the plant that is connected to the battery, and when the battery is utilized together with the internal power-supply device B placed in the individual house or plant, necessary power to the load 5 in the house or the plant can be supplied.

The autonomous operation control unit 13 is activated when a blackout of the commercial power-source system A occurs, and outputs a reference frequency of 50 Hz, etc., thereby accomplishing an autonomous operation function of operating the inverter 12 irrelevant to the commercial power-source system A. The interconnection operation control unit 14 interconnects and operates the inverter 12 of the external power-supply device 1 with the commercial power-source system A. The communication unit 15 exchanges an operation instruction, etc., to the autonomous operation control unit 13 and the interconnection operation control unit 14.

The external power-supply device 1 normally operates as a battery in synchronization with the commercial power-source system A in this embodiment, but may be operated only when a blackout occurs like an engine-type power generation device. In addition, the external power-supply device 1 may perform charging/discharging of power relative to the internal power-supply device B when no blackout of the commercial power-source system is occurring, thereby accomplishing a peak-cut/peak-shift function of leveling the load to the internal power-supply device B.

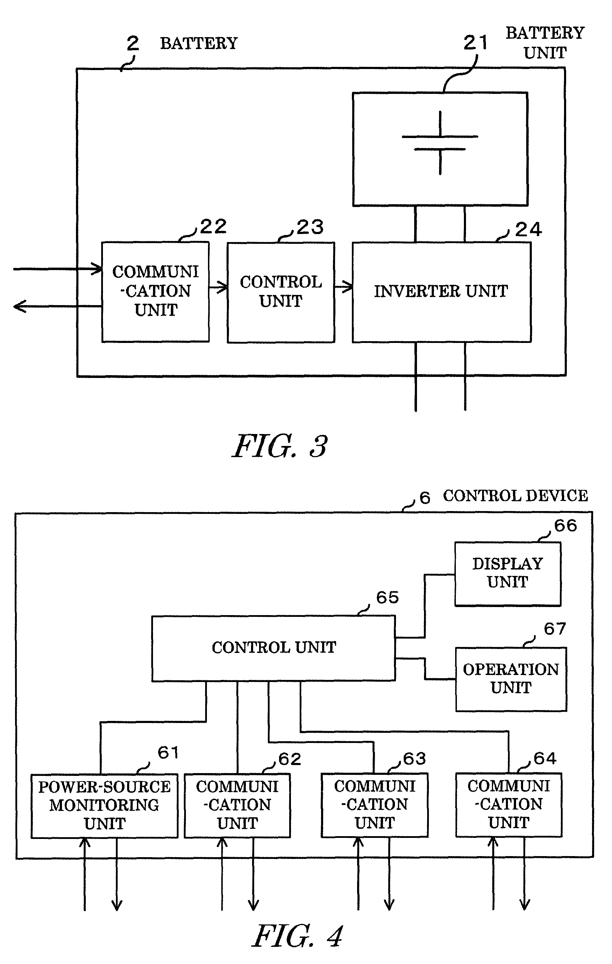

As illustrated in FIG. 3, the battery 2 of the internal power-supply device B includes a battery unit 21, a communication unit 22, a control unit 23, and an inverter unit 24. The battery unit 21 suppresses a solar light fluctuation of the solar power generation device 4 and a fluctuation of the load 5, and has a capacity and an output that do not transfer the fluctuation to the external power-supply device 1. The operation of the battery 2 and the deactivation thereof are controlled through the communication unit 22 in accordance with a control instruction from the control device 6. The control unit 23 suppresses the operation of the inverter unit 24 and the deactivation thereof, and has a follow-up function of accomplishing a synchronization with the AC output by an external AC power source, i.e., the AC output by the commercial power-source system A and the external power-supply device 1 at the time of a blackout.

The fuel cell battery 3 is a generator based on, for example, gas cogeneration, and outputs AC power. The control device 6 instructs the operation of the fuel cell battery 3 and the deactivation thereof through a communication. It is not illustrated in the figure but the fuel cell battery 3 includes, like the battery 2, a power generation unit, a communication unit, a control unit, and an inverter unit, and has a follow-up function of accomplishing a synchronization with the AC output by the commercial power-source system A and the external power-supply device 1 at the time of a blackout.

The solar power generation device 4 is a power generator with solar light cells (solar cells), and outputs AC power. The output by the solar power generation device 4 depends on the amount of solar light (weather and season), and is unstable. Hence, when the output is small and the load becomes large, harmonics increase and the waveform may be deformed, or when it is shaded, no AC power is output. It is not illustrated in the figure but the solar power generation device 4 includes, like the battery 2 and the fuel cell battery 3, a power generation unit, a communication unit, a control unit, and an inverter unit, and has a follow-up function of accomplishing a synchronization with the AC output by the commercial power-source system A and the external power-supply device 1 at the time of a blackout.

As illustrated in FIG. 4, the control device 6 includes a power-supply monitoring unit 61 which detects a blackout of the commercial power-source system A, and which detects the operation/deactivation of the external power-supply device 1. The power-supply monitoring unit 61 detects whether or not AC power is supplied to the commercial power-source system A or to the power-supply line through unillustrated current/voltage sensors provided at the commercial power-source system A and at the power-supply line in the house or the plant, and in accordance with the detection result, determines a blackout of the commercial power-source system A and the presence/absence of the output by the external power-supply device 1. The power-supply monitoring unit 61 may detect an operation of the external power-supply device 1 through a communication with the communication unit 15.

The control device 6 includes a communication unit 62 that transmits an instruction for controlling the operation of the battery 2, a communication unit 63 that transmits an instruction for controlling the operation of the fuel cell battery 3, a communication unit 64 that transmits an instruction for controlling the operation of the solar power generation device 4, and a control unit 65 that includes a computer program for controlling the respective units. In addition, the control device includes a display 66 that displays the operation statuses of the battery 2, the fuel cell battery 3, and the solar power generation device 4, and, an operation unit 67 for an initial setting of each device which permits an inputting through a touch panel, etc. Those display 66 and input operation unit 67 are not essential in this embodiment.

### (1-2) Operation

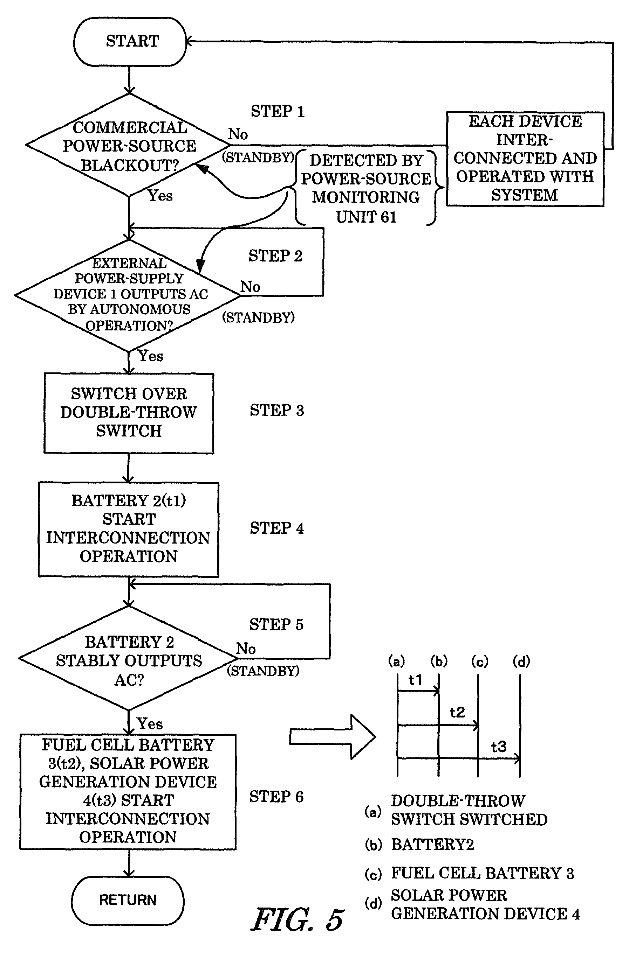

The operation according to this embodiment will be explained with reference to the flowchart of FIG. 5. In the operation condition of the device of this embodiment, the power-supply monitoring unit 61 of the control device 6 always monitors (step 1) the operation of the commercial power-source system A. When no blackout of the commercial power-source system A is occurring, the control device 6 sets the double-throw switch 7 so as to connect the commercial power-source system A with the internal power-supply device B and the load 5. Hence, the battery 2, the fuel cell 3, and the solar power generation device 4 which are placed in the house or the plant are interconnected and operated with the commercial power-supply system A while monitoring the frequency, phase, and voltage of the AC output by the commercial power-source system A through the respective own follow-up functions.

When the power-supply monitoring unit 61 detects (step 1: YES) a blackout of the commercial power-source system A, the control device 6 transmits an operation shutdown instruction to all internal power supplies through the communication units 62 to 64. Simultaneously, the power-supply monitoring unit 61 determines (step 2) whether or not the external power-supply device 1 is capable of an autonomous operation to output AC power. When the external power-supply device 1 is not in operation, the power-supply monitoring unit 61 stands by until the output of AC power is enabled.

That is, when the external power-supply device 1 serves as a battery, battery charging/discharging is always performed in conjunction with the commercial power-source system A. Hence, an immediate switching to the external power-supply device 1 is possible when a blackout of the commercial power-source system A occurs, but when the external power-supply device 1 needs a certain warm-up time until it starts stable outputting like an engine type power generator, it is necessary to perform a switchover operation after confirming that a stable output is enabled. Accordingly, the power-supply monitoring unit 61 monitors in the step 2 whether or not the external power-supply device 1 becomes able to output AC power. As to the determination on whether or not the external power-supply device 1 becomes able to output AC power, the determination is performed upon transmission of monitoring data on the operation status of the external power-supply device 1 from the communication unit 15 of the external power-supply device 1 to the communication unit 62 of the control device 6.

When the external power-supply device 1 becomes able to output AC power (step 2: YES), the double-throw switch 7 is switched over (step 3) to disconnect the commercial power-source system A from the internal power-supply device B and the load 5, but to connect therewith the external power-supply device 1. Hence, the power supply is recovered by the external power-supply device 1 in the house or the plant, enabling power supply to the load 5. The double-throw switch 7 may be switched over automatically in accordance with an instruction from the control unit 65 or manually by a manager of the house or the plant.

After the completion of the connection with the external power-supply device 1, the power-supply monitoring unit 61 outputs an interconnection-operation start instruction to the communication unit 22 of the battery 2, and the control unit 23 of the battery 2 receives this start instruction, and starts an interconnection operation (step 4) with the external power-supply device 1. This interconnection operation is performed by the control unit 23 of the battery 2 which controls the inverter 24 so as to follow the frequency of the AC output by the external power-supply device 1 and the voltage thereof, and the like.

After the interconnection-operation instruction is output by the battery 2, the power-supply monitoring unit 61 monitors (step 5) whether or not the battery 2 is outputting stable AC power, and until the interconnection operation with the battery 2 becomes stable, the control device 6 stands by without starting the interconnection operation of the fuel cell battery 3 and the solar power generation device 4 (step 5: NO).

Since the battery 2 has a stable output power, when the interconnection operation with the external power-supply device 1 starts, no harmonic strain, etc., occurs on the power-supply line in the house or the plant, and power can be stably supplied after the interconnection. The battery 2 is a power supply which can adjust the output capacity and which has a capability of easing the output fluctuation of other internal power supplies and the load fluctuation. A time period from the power-supply recovery to the start of the interconnection operation with the battery 2 is referred to as t1.

After the power-supply monitoring unit 61 confirms (step 5 : YES) that the battery 2 is stably outputting AC power, the control device 6 causes the communication unit 63 to transmit an interconnection-operation start instruction to the fuel cell battery 3. The fuel cell battery 3 receives this start instruction and starts an interconnection operation. A time period from the power-supply recovery to the start of the interconnection operation with the fuel cell battery 3 is referred to as t2. In this case, since only the battery 2 that has a stable output capacity is connected with the external power-supply device 1, no voltage fluctuation occurs on the power-supply line. Hence, the follow-up function of the fuel cell battery 3 can perform an interconnection operation with the external power-supply device 1 without being affected by the battery 2 that has been connected already.

Likewise, the control device 6 transmits, through the communication unit 64, an interconnection-operation start instruction to the solar power generation device 4, and the solar power generation device 4 receives this start instruction and starts an interconnection operation (step 6). A time period from the power-supply recovery to the start of the interconnection operation with the solar power generation device 4 is referred to as t3. Since the fuel cell battery 3 has the stable output capacity like the battery, no voltage fluctuation occurs on the power-supply line. The solar power generation device 4 can obtain information on AC output flowing through the power-supply line, and can surely perform an interconnection operation.

In the control device 6, the time periods t1, t2, and t3, that are time periods from the power-supply recovery to the starts of the interconnection operations respectively with the battery 2, the fuel cell battery 3, and the solar power generation device 4 are set as t1 < t2 < t3. Hence, the internal power supply which has a fluctuation in the output capacity and which is more likely to cause a fluctuation in the power-supply voltage at the time of the interconnection operation performs the interconnection operation later with the external power-supply device 1. Consequently, when the multiple power-supplies placed in the house or the plant are connected with the external power-supply device 1, a disadvantage that the interconnection operation of a power supply to be connected later becomes difficult due to an adverse effect of the power supply connected beforehand can be overcome.

When the power-supply monitoring unit 61 detects the recovery of the commercial power-supply system A, the control unit 65 shuts down the operation of the external power-supply device 1 and that of the internal power-supply device B, and switches over the double-throw switch 7 to the commercial power-source system A. Subsequently, the control unit 65 confirms that the commercial power-source system A supplies power to the power-supply line, and starts the interconnection operation in the order of the battery 2, the fuel cell battery 3, and the solar power generation device 4 like the case in which the external power-supply device 1 is activated. In this case, also, the respective internal power supplies perform an interconnection operation with the commercial power-source system A through the respective own follow-up functions.

### (1-3) Effects of Embodiment

According to this embodiment, an output waveform disturbance, etc., from the external power-supply device 1 can be suppressed at the time of the connection with various power supplies that construct the internal power-supply device B. Hence, the tracking functions of various power supplies can be utilized effectively, and even if a power supply like the solar power generation device 4 which has a large output fluctuation is connected with the external power-supply device, the interconnection operation between the external power-supply device 1 and each internal power supply can be surely performed.

In this embodiment, upon detection of a power-supply interruption to the power-supply line, the operation of each internal power supply is automatically shut down. Accordingly, at the time of an interconnection operation with the external power-supply device 1 when a blackout occurs, and an interconnection operation with the commercial power-source system A when the power-supply therefrom is recovered, AC output by the external power-supply device 1 and by the commercial power-source system A is detected, and the respective internal power supplies can follow up the characteristics of the detected AC output, making the interconnection operation smooth.

### (2) Second Embodiment

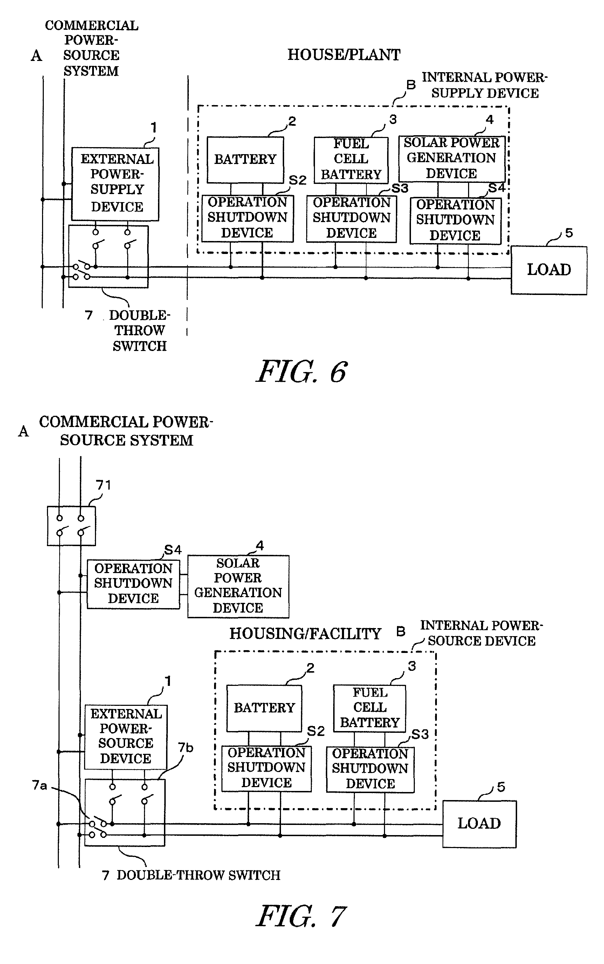

FIG. 6 is a block diagram illustrating a configuration according to a second embodiment of the present disclosure. According to this embodiment, the operation performed by the control device 6 is manually performed by the manager of a house or a plant without the control device 6 of the first embodiment.

In this embodiment, the battery 2, the fuel cell battery 3, and the solar power generation device 4 that construct the internal power-supply device B are provided with respective operation shutdown devices S2 to S4 for a case of a detection of no power supply to the power-supply line. Hence, when the commercial power-source system A is suspended and the power supply to the power-supply line is interrupted, the respective operation shutdown devices S2 to S4 detect this event, and shut down the operations of all internal power supplies. When the manager comes to know the occurrence of a blackout through a deactivation of the load or through an emergency lamp provided additionally, the manager manually switches over the double-throw switch 7, and connects the external power-supply device 1 to the power-supply line.

When power is supplied to the power-supply line from the external power-supply device 1, the manager manually deactivates the operation shutdown device S2 of the battery 2, and starts the operation of the battery 2. Since the battery 2 is provided with the tracking function, the battery 2 starts an interconnection operation with the external power-supply device 1. Likewise, the manager sequentially deactivates the operation shutdown device S3 of the fuel cell battery 3, and the operation shutdown device S4 of the solar power generation device 4, thereby accomplishing the interconnection operation of all components of the internal power-supply device B with the external power-supply device 1.

According to this embodiment, also, the internal power supply which has an output capacity fluctuation and which is more likely to cause an output fluctuation at the time of an interconnection operation performs the interconnection operation later with the external power-supply device 1. Consequently, when the multiple power supplies are connected with the external power-supply device 1, a disadvantage that the interconnection operation with a power supply to be connected later becomes difficult due to an adverse effect of the power supply connected beforehand can be addressed.

### (3) Other Embodiments

The embodiments of the present disclosure are not limited to the aforementioned embodiments as those are, and modifications can be made to the components in an actual practice circumstance to embody the present disclosure without departing from the scope and spirit of the present disclosure. In addition, various species of the present disclosure can be made by combining the multiple components disclosed in the aforementioned embodiments as needed. For example, some components may be eliminated from all components exemplified in the embodiments. Still further, components from different embodiments may be combined as needed. For example, the following embodiments are also within the scope of the present disclosure.
(a) Since the external power-supply device 1 autonomously operates, a voltage fluctuation due to the increase/decrease of the load 5 can be basically covered by the external power-supply device 1. Hence, the battery 2 itself does not need a particular function of covering the voltage fluctuation. However, when the battery 2 is provided with the function of covering the voltage fluctuation, the autonomous operation control to the external power-supply device 1 can be facilitated.
(b) The battery 2 was adopted as a power supply that has a little output capacity fluctuation in the internal power supply, but instead of the battery 2, a fuel cell battery 4 may be utilized or other kinds of power supplies like the battery of an electric vehicle connected to a house or a plant can be utilized.
(c) In the first embodiment, the control device 6 that is means which detects a blackout of the commercial power-source system A outputs the shutdown instruction to the respective internal power supplies, but like the second embodiment, the respective internal power supplies may be provided with the operation shutdown devices S2 to S4. Likewise, a part of the first embodiment and that of the second embodiment may be combined to construct a system.
(d) The double-throw switch 7 switches over the supply of power between the commercial power-source system A and the external power-supply device 1, but it is not always necessary to employ the double-throw switch, and multiple switches may be combined as needed and applied.
(e) When the external power-supply device 1 is constructed by a battery, when the commercial power-source system A is in operation, the external power-supply device 1 can be charged by the commercial power-source system A, and when the internal power-supply device B has surplus power at the time of a blackout of the commercial power-source system A, the external power-supply device 1 can be charged by the internal power-supply device B.
(f) In the aforementioned embodiments, the external power-supply device 1 and the switch 7 are placed outside the house or the multifamily building like a condominium building, but the external power-supply device 1 and the switch 7 may be placed inside the house or the multifamily building like a condominium building. In addition, the ON/OFF operation of the switch 7 may be controlled by the control device 6 like the first embodiment.
(g) In the aforementioned embodiments, the external power-supply device 1 is constructed by an engine type power generator or a battery, but may be constructed by a solar power generation device or a fuel cell battery. In addition, as illustrated in FIG. 7, the external power-supply device 1 constructed by an engine type power generator or a battery may be installed in parallel with the solar power generation device 4. Still further, a switch 71 may be provided between the system and the external power-supply device 1 or the solar power generation device 4, and when a system blackout is detected, the electrical connection between the system and the internal power-supply device may be turned ON through a contact 7a of the double-throw switch 7 at the system side, and the switch 71 may be turned ON, thereby causing power from the external power-supply device 1 and that from the solar power generation device 4 to be interconnected with the internal power-supply device through a contact 7b of the double-throw switch 7. Moreover, the ON/OFF operation of the double-throw switch 7 and that of the switch 71 may be controlled by the control device 6 like the first embodiment.

### EXPLANATION OF SYMBOLS

- A: Commercial power-source system
- B: Internal power-supply device
- 1: External power-supply device
- 11: Battery
- 12: Inverter
- 13: Autonomous-operation control unit
- 14: Interconnection-operation control unit
- 15: Communication unit
- 2: Battery
- 21: Battery unit
- 22: Communication unit
- 23: Control unit
- 24: Inverter unit
- 3: Fuel cell battery
- 4: Solar power generation device
- 5: Load
- 6: Control device
- 61: Power-supply monitoring unit
- 62-64: Communication unit
- 65: Control unit
- 66: Display
- 67: Operation unit
- 7: Double-throw switch
- 71: Switch
- 7a, 7b: Contact
- S2-S4: Operation shutdown device

## Claims

1. A power-supply control system comprising:
an external power-supply device to be activated when a blackout of a commercial power-source system occurs;
a switch switching between the commercial power-source system and the external power-supply device at a time of the blackout or a power-supply recovery;
an internal power-supply device comprising a plurality of internal power supplies;
a load connected to those power supplies; and
a control device controlling activation and deactivation of those power supplies,
wherein:
the internal power-supply device comprises a power supply having a stable output capacity, and another power source having a larger output capacity fluctuation than the output capacity of the power supply having a stable output capacity;
each of the plurality of internal power supplies has a tracking function to the commercial power-source system and to the external power-supply device;
each of the plurality of internal power supplies performs interconnection operation with the commercial power-source system and the external power-supply device by the tracking function;
the control device controls the switch to switch from the commercial power-source system to the external power-supply device at the time of the blackout of the commercial power-source system to supply power to the load from the external power-supply device;
the control device controls the power supply having the stable output capacity to perform the interconnection operation with the external power-supply device after switching to the external power-supply device, and then controls the another power source having the larger output capacity fluctuation to perform the interconnection operation with the external power-supply device.

2. The power-supply control system according to claim 1, wherein:
the power supply having the stable output capacity comprises a battery or a fuel cell battery; and
the another power supply having the larger output capacity fluctuation comprises a solar power generation device.

3. The power-supply control system according to claim 1 or 2, wherein the internal power-supply device and/or the external power-supply device is provided for an individual house or plant, or, for a plurality of houses or plants.

4. The power-supply control system according to any one of claims 1 to 3, wherein when detecting a deactivation of the commercial power-source system and/or the external power-supply device, the control device controls each of the internal power supplies configuring the internal power-supply device to shut down an operation.

5. The power-supply control system according to claim 1, wherein:
the external power-supply device comprises a battery;
the external power-supply device is charged by the commercial power-source system when the commercial power-source system is normally operated; and
when the blackout of the commercial power-source system occurs and the internal power-supply device has a surplus power, the external power-supply device is charged by the internal power-supply device.

6. The power-supply control system according to any one of claims 1 to 5, wherein when no blackout of the commercial power-source system is occurring, the external power-supply device is operated for a load leveling.

7. A power-supply control apparatus comprising:
an external power-supply device to be activated when a blackout of a commercial power-source system occurs;
a switch switching between the commercial power-source system and the external power-supply device at a time of the blackout or a power-supply recovery;
an internal power-source device comprising a plurality of internal power supplies;
a load connected to those power supplies; and
a control device controlling activation and deactivation of those power supplies,
wherein:
the internal power-supply device comprises a power supply having a stable output capacity, and another power source having a larger output capacity fluctuation than the output capacity of the power supply having a stable output capacity;
each of the plurality of internal power supplies has a tracking function to the commercial power-source system and the external power-supply device;
each of the plurality of internal power supplies performs interconnection operation with the commercial power-source system and the external power-supply device by the tracking function;
the control device comprises:
a power-source monitoring unit detecting the blackout of the commercial power-source system; and
a control unit configured to control the switch to switch from the commercial power-source system to the external power-supply device to supply power to the load from the external power-supply device, to control the power source having the stable output capacity to perform the interconnection operation with the external power-supply device, after switching to the external power-supply device, , and then to control the another power source having the larger output capacity fluctuation to perform the interconnection operation with the external power-supply device.

8. A power-supply control method for a system, the system comprising:
an external power-supply device to be activated when a blackout of a commercial power-source system occurs;
a switch switching between the commercial power-source system and the external power-supply device at a time of the blackout or a power-supply recovery;
an internal power-supply device comprising a plurality of internal power supplies; and
a load connected to those power supplies,
wherein the method comprises:
switching, by the switch, from the commercial power-source system to the external power-supply device at a time of the blackout of the commercial power-source system;
first connecting a power supply having a little output capacity fluctuation to the external power-supply device that is connected to the load to perform interconnection operation between the power supply and the external power-supply device; and
then connecting a power supply having a fluctuating output capacity to perform interconnection operation between the power supply and the external power-supply device.
